# EUROPEAN PATENT APPLICATION

(11) **EP 2 907 374 A1**
(43) Date of publication of application: **19.08.2015**
(21) Application number: 15155252.8
(22) Date of filing: 16.02.2015
(51) Int. Cl.: A01G 9/10

(54) **A plant growing device**

(30) Priority: 14.02.2014 NL 2012270
(71) Applicant: Max Roots B.V., 2681 TW Monster (NL)
(72) Inventor: van den Ende, Reinerus Cornelis Wilhelmus, 2681 TW Monster (NL)
(74) Representative: Jansen, Cornelis Marinus

(57) **Abstract**

The invention relates to a plant growing device. The device comprises a rooting plug made from a substrate including organic and/or non-organic material for cultivation of a plant. The rooting plug has a substantially cylindrical plug body with a top surface, an outer side surface and a bottom surface. Further, the plant growing device comprises a layer containing hydrophobic particles. The layer is attached to the top surface and/or bottom surface of the plug body.

## Description

The invention relates to a plant growing device, comprising a rooting plug made from a substrate including organic and/or non-organic material for cultivation of a plant, the rooting plug having a substantially cylindrical plug body with a top surface, an outer side surface and a bottom surface.

Such a plant growing device is known in the art, e.g. from European patent publication EP 2 572 571. Such devices are generally used from growing up plant material such as plants belonging to the Orchid family or the Bromeliad family and/or a plant being in a relatively vulnerable grow stadium such as a young plant, e.g. grown from a seed or grown by applying a tissue culture technique. It appears, in practice, that moss or alga may grow on rooting plugs. Further, an infection of a plant's stem and/or roots by bacteria or fungi's may develop,.

It is an object of the invention to provide a rooting plug according to the preamble wherein at least one of the disadvantages is reduced. In particular, the invention aims at reducing the occurrence of moss or alga at the plug, and reducing the occurrence of an infection of a plant's stem and/or root. Thereto, according to an aspect of the invention, the plant growing device further comprises a layer containing hydrophobic particles, the layer being attached to the top surface and/or the bottom surface of the plug body.

By providing applying a layer containing hydrophobic particles at the top surface of the plug, the micro climate near the stem of the plant can be kept dry, so that any moss or alga growth, as well as any development of rottenness of the plant's stem is counteracted. Similarly, by applying a layer containing hydrophobic particles at the bottom surface of the plug, the lower part of the root structure can be kept dry, thereby reducing any occurrence of rottenness at the lower part of the root structure, thus improving growing conditions of the plant. Advantageously, additional structures or method steps for conditioning a desired dry micro climate are superfluous.

It is noted that the use of loose granulate particles is known for strewing them on a soil area where plants are growing, to counteract any growth of moss or alga.

Advantageous embodiments according to the invention are described in the appended claims.

By way of non-limiting example only, embodiments of the present inventions will now be described with reference to the accompanying drawing in which:
Figure 1 shows a schematic perspective view of a plant growing device according to the invention, and
Figure 2 shows a schematic cross sectional side view of another plant growing device according to the invention.

The embodiment disclosed herein is shown as an examples only and should by no means be understood as limiting the scope of the claimed invention in any way. In this description and in the figure, the same or similar elements have the same or similar reference signs.

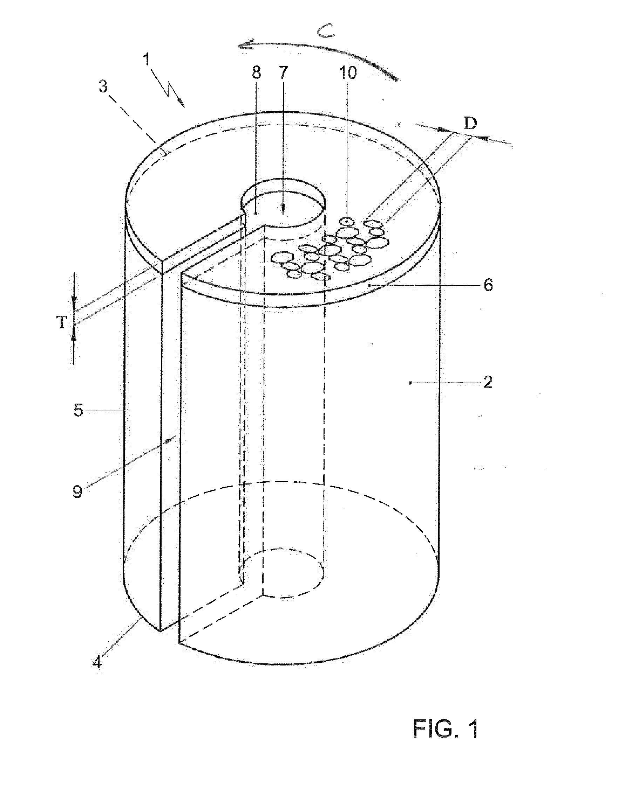

Figure 1 shows a schematic perspective view of a plant growing device 1 according to the invention. The device comprises a rooting plug 2 for cultivation of a plant (not shown). The plug 2 is made from a substrate including organic and/or non-organic material that is compatible with plant material. Advantageously, the plug body may be formed as an integral unit. The substrate may be formed as a composition. In a preferred embodiment, the composition and/or material is spongy and/or penetrable to growing roots. Such and other suitable substrate materials and/or compositions are known in the art. For example, the substrate material or composition may comprise organic fibres, e.g. coconut fibre, peat and/or bark. Here, the plug 2 comprises for instance a substrate composition including particles joined by a bind agent, such as a non-toxic and/or organic glue. The joined particles may e.g. comprise organic fibres and/or soil particles.

The rooting plug has a substantially cylindrical plug body 2 with a generally flat top surface 3, a bottom surface 4 and an outer side surface 5. Although in the shown embodiment the plug body 2 is substantially circular cylindrically-shaped extending in a circular direction C, the plug body may have another cylindrical shape. As an example, the plug 2 can have substantially the shape of a cuboid and/or prisms. Further, the substantially cylindrical plug body 2 may be tapered to some extent that at least side wall deviations from a cylindrical shape of less than e.g. 18 degrees, 14 degrees, 11 degrees, 9 degrees, 7 degrees or 3 degrees would be within the scope.

The plug body 2 is provided with a canal 7, formed by an inner wall 8 of the plug body 2, for accommodating at least a part of a root structure of a plant. It is noted that, as an alternative to the canal, a cavity or an inner chamber can be provided in the plug body 2, for accommodating at least a part of a root structure of a plant. It is further noted that the plug body 2 can also be formed without a canal, cavity or inner chamber. Then, plug body substantially fills the space enclosed by the top surface 3, the bottom surface 4 and the outer side surface 5. Further, the plug 2 is provided with a slot opening 9 extending from the canal 7 through the substrate in a radial direction, outwardly, enabling the root structure of the plant to be inserted into the canal 7 from a lateral direction.

The plant growing device 1 further comprises a layer 6 containing hydrophobic particles 10, the layer 6 being attached to the top surface 3 of the plug body 2. Preferably, the layer 6 is attached to the top surface 3 of the plug body 2 using adhesive material such as glue, so that a dry top layer is obtained providing an optimal micro climate for the plant to be cultivated in the plant growing device 1.

In addition, or alternatively, a layer containing hydrophobic particles is be attached to the bottom surface 4 of the plug body 2 to regulate moisture conditions near the bottom side of the plant's root structure.

The hydrophobic particles 10 may include synthetic or natural granular material. Preferably, the hydrophobic particles 10 include organic granules such as cork granules, organic fibres, anorganic expanded rock particles e.g. perlite, glass fibres, plastic granules, and/or equivalents thereof. As an example, organic fibres such as sawdust, wood chips, or coconut chips could be applied. Further, plastic granules may include recycled plastic and/or polyvinyl chloride.

The thickness T of the layer 6 is preferably at least circa 0.1 mm. As an example, the layer thickness T is circa 1 cm, circa 5 mm or circa 1 mm. Further, the dimensions of the hydrophobic particles 10 may range between circa 0.05 mm and circa 5 cm, preferably between circa 0.5 mm and 5 mm. As an example, a hydrophobic particle may have a diameter D of circa 1 mm, i.e. the smallest virtual sphere enclosing such particle may have a diameter of circa 1 mm. However, smaller sized hydrophobic particles may form a relatively thin, membrane type top and/or bottom layer 6 having a layer thickness T in the order of circa 0.1 mm or greater.

In a further embodiment, the inner wall 8 defining a cavity, canal 7 or inner chamber in the plug body 2 is also provided with a layer containing hydrophobic particles, for regulating a moisture level inside the plug 2, near the root structure of the plant.

In yet a further embodiment, the cylindrical plug body 2 is composed of a multiple number of plug body parts. As an example, the plug body 2 is composed of two cylindrical plug body segments, such as two similar cylindrical plug segments having a semi-circular cross-section. Alternatively, the plug body 2 is unitary, composed as a single unit.

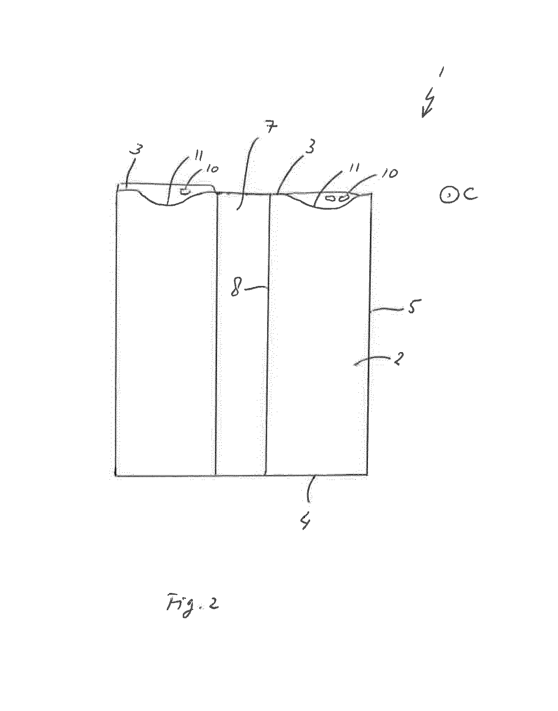

Figure 2 shows a schematic cross sectional side view of another plant growing device 1 according to the invention. The cross section is taken through the canal 7 and from the top surface 3 to the bottom surface 4. Here, the top surface 3 is not flat but includes a groove 11 extending in a circumferential direction C. Optionally, the groove surrounds or even encloses the canal 7 in the circumferential direction C. The groove 11 is filled with hydrophobic particles 10. Then, the layer thickness T of the layer 6 containing hydrophobic particles 10 may not be constant but may be varying depending on the actual position on the top surface 3. As shown on the left-hand side in Fig. 2, said particles layer 6 may cover the top surface 3 of the plug body 2. However, as shown on the right-hand side of Fig. 2, said particles layer 6 may be localized in the groove 11 only. Further, as an alternative to being provided with a groove, the top surface 3 of the plug body 2 may be provided with a single or a multiple number of cavities filled with hydrophobic particles 10. The cavities may have a circumferential dimension surrounding merely a section of the canal 7, e.g. in a range of circa 90° or more or less. As an example, the dimensions of the cavities in the radial and circumferential direction of the body plug 2 are in the same order. The cavities may e.g. be dome-shaped or block-shaped.

The invention is not restricted to the embodiments described above. It will be understood that many variants are possible.

As an example, the rooting plug 2 can be provided with a, preferably resilient, bottom part for closing of the bottom side of the canal 7.

These and other variants will be apparent to the person skilled in the art and are considered to fall within the scope of the invention as formulated by the following claims. For the purpose of clarity and a concise description features are described herein as part of the same or separate embodiments. However, it will be appreciated that the scope of the invention may include embodiments having combinations of all or some of the features described.

## Claims

1. A plant growing device, comprising a rooting plug made from a substrate including organic and/or non-organic material for cultivation of a plant, the rooting plug having a substantially cylindrical plug body with a top surface, an outer side surface and a bottom surface, the plant growing device further comprising a layer containing hydrophobic particles, the layer being attached to the top surface and/or bottom surface of the plug body.

2. A plant growing device according to claim 1, wherein the layer is attached to the top surface and/or bottom surface of the rooting plug body using adhesive material.

3. A plant growing device according to claim 1 or 2, wherein the hydrophobic particles include synthetic or natural granular material.

4. A plant growing device according to any of the preceding claims, wherein the hydrophobic particles include organic granules such as cork granules, organic fibres, expanded rock particles such as perlite, glass fibres and/or plastic granules.

5. A plant growing device according to claim 4, wherein the plastic granules include recycled plastic and/or polyvinyl chloride.

6. A plant growing device according to any of the preceding claims, wherein the layer has a thickness of at least circa 0.1 mm.

7. A plant growing device according to any of the preceding claims, wherein the hydrophobic particles have a diameter ranging between circa 0.05 mm and circa 5 cm, preferably between circa 0.5 mm and circa 5 mm.

8. A plant growing device according to any of the preceding claims, wherein the plug body is provided with a cavity, canal or inner chamber, formed by an inner wall of the plug body, for accommodating at least a part of a root structure of a plant, and wherein the inner wall is also provided with a layer containing hydrophobic particles.

9. A plant growing device according to claim 8, wherein the plug body is provided with a slot opening extending from the cavity, canal or inner chamber through the substrate in a radial direction, outwardly.

10. A plant growing device according to any of the preceding claims, wherein the top surface of the plug body is provided with a cavity filled with hydrophobic particles.

11. A plant growing device according to any of the preceding claims, wherein the top surface of the plug body is provided with a groove extending in a circumferential direction and being filled with hydrophobic particles.
